# EUROPÄISCHE PATENTSCHRIFT

(11) **EP 1 768 497 B1**
(45) Veröffentlichungstag und Bekanntmachung des Hinweises auf die Patenterteilung: **12.08.2009**
(21) Anmeldenummer: 04763391.2
(22) Anmeldetag: 22.07.2004
(51) Int. Cl.: A23L 1/035, A23L 1/30, A23L 2/38

(54) **SOLUBILISATE VON ÄTHERISCHEN ÖLEN UND ANDEREN STOFFEN**
ESSENTIAL OIL AND OTHER SUBSTANCE SOLUBILISED PRODUCTS
PRODUITS SOLUBILISES D'HUILES ESSENTIELLES ET D'AUTRES SUBSTANCES

(43) Veröffentlichungstag der Anmeldung: 04.04.2007
(73) Patentinhaber: AQUANOVA AG, 64295 Darmstadt (DE)
(72) Erfinder: BEHNAM, Dariush, 64380 Rossdorf (DE)
(74) Vertreter: Blumbach - Zinngrebe
(86) Internationale Anmeldenummer: PCT/EP2004/008175
(87) Internationale Veröffentlichungsnummer: WO 2006/010370

(56) Entgegenhaltungen:
- DE-A1- 10 103 454
- DE-A1- 10 108 614
- DE-A1- 10 306 177
- US-A- 3 052 608
- US-A1- 2004 081 670
- SPERNATH A ET AL: "Food grade Microemulsions based on nonionic emulsifiers: Media to enhance Lycopene Solubilization" JOURNAL OF AGRICULTURAL AND FOOD CHEMISTRY, AMERICAN CHEMICAL SOCIETY. WASHINGTON, US, Bd. 50, Nr. 23, 2002, Seiten 6917-6922, XP002249048 ISSN: 0021-8561

## Beschreibung

Bei der Einarbeitung von Wirk- oder Zusatzstoffen in die Endprodukte im Lebensmittel-, Kosmetik und Pharmasektor sowie in Nährlösungen für Zell- oder Bakterienkulturen steht die stabil homogene Feinverteilung der Wirk- oder Zusatzstoffe in den jeweiligen Endprodukten aus Gründen der Produktionstechnik, Sicherheit und Praktikabilität bei der Anwendung, der Einhaltung der gesetzlichen Regularien sowie der Optik im Vordergrund.

Neben der Stabilität der Homogenität, die oft für Jahre garantiert werden muss, spielt die optimale Feinverteilung der Wirk- oder Zusatzstoffe in den kleinsten Volumeneinheiten der jeweiligen Endprodukte eine entscheidende Rolle. Die Einarbeitung von wasserlöslichen Wirk- oder Zusatzstoffen in die Wasser enthaltenden Endprodukte ist in der Regel stabil homogen in feinster Partikelverteilung möglich.

Dagegen stellt die Einarbeitung von fettlöslichen und in Wasser nicht oder schwer löslichen Wirk- oder Zusatzstoffen in Endprodukte insofern physikalisch ein Problem dar, als solche Wirk- oder Zusatzstoffe zwecks homogener Verteilung erst nach einem entsprechenden zeit- und kostenaufwendigen Matrix-Design (Öl/Öl-Gemisch oder Öl-Wasser-Emulsion) in die Endprodukte eingearbeitet werden können.

US-A-2004/081671 beschreibt ein Konzentrat bestehend aus einer W-3-Feltsäure and einem Polysorbat.

Um zum Beispiel eine fettlösliche Substanz wie Retinol oder β-Carotin (Tagesbedarf ca. 2 mg/Tag) in eine Menge Endprodukt, die an einem Tag verzehrt bzw. angewendet wird, einarbeiten zu können, muss diese geringe Menge an Retinol oder β-Carotin durch eine unerwünschte Zugabe einer unverhältnismäßig großen Menge Öl volumenmäßig vergrößert werden, damit eine optimale homogene Verteilung im Endprodukt gewährleistet werden kann.

Diese physikalisch bedingte, jedoch unerwünschte Volumenvergrößerung der oben genannten Substanzen zwecks homogener Verteilung in den Endprodukten ist oft sowohl für Lebensmittel als auch für Kosmetika und Pharmazeutika technologisch unerlässlich.

Eine Öl-Wasser-Emulsion dieser Substanzen zwecks Einarbeiten in Endprodukte ist nicht weniger aufwendig, wobei wegen der in der Emulsion gebildeten Partikelgröße von mind. 1µ keine optimale Feinverteilung im Endprodukt stattfinden kann. Abgesehen davon, dass die nicht oder schwer wasserlöslichen Substanzen aus den oben genannten Gründen zu Problemen bei der Verarbeitung und der schlechten Homogenität führen, können diese Substanzen, eingebettet in Öl/Öl-Mischungen oder Öl/Wasser-Emulsionen, nur eingeschränkt resorbiert werden.

Der Erfindung liegt daher die Aufgabe zugrunde, in Wasser schwer oder nicht lösliche Substanzen derart zu verarbeiten, dass diese, in Wasser oder Öl eingebracht, eine klare Lösung ergeben und sich in Lebensmittel, Kosmetika, Pharmazeutika sowie Nährlösungen in feinster homogener Verteilung leicht einarbeiten lassen.

Dazu sieht die Erfindung ein Konzentrat vor, das aus einem Wirkstoff aus der Gruppe, welche aus einem ätherischen Öl, einem Terpinen, Phosphatidylserin, Lanolin, konjugiertem Linolsäuretriglycerid, einem Citral und einem Teebaumöl besteht, und einem Überschuß an einem Polysorbat besteht. Gegebenenfalls kommt ein Zusatz an Glycerol oder Ethanol zu der Mischung in Betracht. Besonders bevorzugt ist der Einsatz von Polysorbat 80, bei dem ätherischen Öl jedoch von Polysorbat 20. Besonders bewährt haben sich erfindungsgemäße Konzentrate von Wirkstoffen, deren bevorzugte Zusammensetzungen im einzelnen in den abhängigen Ansprüchen angegeben sind.

Die erfindungsgemäßen, wasserfreien, jedoch in Wasser löslichen Konzentrate lassen sich beispielsweise in der Weise gewinnen, daß der betreffende Wirkstoff mit einem Überschuß an Polysorbat 80 oder Polysorbat 20 vermischt und die Mischung bis zur Klarheit gerührt wird. Zur Beschleunigung des Mischvorgangs empfiehlt es sich, die Mischung auf eine Temperatur von etwa 80°C bis etwa 100°C zu erwärmen.

Auf diese Weise wird der Wirkstoff micelliert, wobei die einzelnen Micellen eine Größe von nicht mehr als etwa 40 nm haben. Durch diese Micellierung wird die Resorption und die Penetration des jeweiligen vom Verdauungstrakt oder der Haut aufgenommenen Wirkstoffes wesentlich erhöht. Die erfindungsgemäßen Konzen-trate sind in Wasser leicht löslich. Zur Beschleunigung der Lösung in Wasser empfiehlt es sich, das Konzentrat in leicht auf etwa 40°C erwärmtes Wasser einzurühren.

Die erfindungsgemäßen Konzentrate finden als Zusätze zu Lebensmitteln, insbesondere nichtalkoholischen Getränken, in der Kosmetik als Zusätze zu Salben und dergleichen Körperpflegemitteln, als Zusätze zu pharmazeutischen Zubereitungen oder Nährlösungen Verwendung.

Die Erfindung wird anhand der folgenden Ausführungsbeispiele erläutert.

### Beispiel 1 (Ätherisches-Öl-Solubilisat):

Material:
a) Ein natürliches Orangenöl mit den im folgenden genannten Eigenschaften, welche einem Analysenzertifikat des Herstellers "Nature - Der grüne Zweig von TUTTO BIANCO" entnommen wurden,
b) Polysorbat 20
   Das Orangenöl ist folgendermaßen charakterisiert:

### Produkt

Artikel Nr. A087
Chargen Nr. V003022
Handelsname: Orangenöl süß
Herkunft: Brasilien
Synonym: Aurantii dulcis aetheroleum
Pharmakopoe: BP

### Eigenschaften

Farbe: klar, gelbbräunlich bis braunrötlich
Geruch: nach süßen Orangen
Geschmack: mild und aromatisch
Konsistenz: flüssig

### Identität

Löslichkeit in Ethanol 90vol%: 1:7 v/v nicht immer klar löslich
relative Dichte bei 20°C: 0,8460
Brechungsindex bei 20°C: 1,4730
optische Drehung bei 20°C: +95°
Säurezahl 1
nichtfl. Anteile: 3% (=Verdampfungsrückstand)
organ. Halogenverb.: nicht nachweisbar
Schwermetalle: nicht nachweisbar
Gehalt an Aldehyden: 2%

### Auswertung der Gaschromatgraphie:

0,5693% n-Dezydaldehyd
0,3359% Anthranilsäure
2,0178% Mycrene
95,7570% D+ Limonene
0,4646% Linalool

Ein ätherisches Öl, wie zum Beispiel 100 g Orangenöl, wird mit 900 g Polysorbat, 20, bis zur Klarheit bzw. homogenen Verteilung verrührt Zur Beschleunigung des Mischvorganges kann das Gemisch zum Beispiel bis 80 °C erwärmt werden. Ein so hergestelltes 10%-iges Orangenöl-Konzentrat läßt sich in Wasser in beliebigem Mischungsverhältnis auflösen. Zur Beschleunigung des Mischvorganges mit Wasser kann das Konzentrat in auf etwa 40°C erwärmtes Wasser eingebracht und aufgelöst werden.

Kann auf die Klarheit verzichtet und das Solubilisat für andere Anwendungen als beispielsweise für klare nichtalkoholische Getränke eingesetzt werden, so kann das Gewichtsverhältnis von ätherischem Öl zu Polysorbat 20 bis zum Beispiel auf 3:7 eingestellt werden. Wird ein anderes Polysorbat als Polysorbat 20 eingesetzt, verändern sich die Gewichtsanteile im Konzentrat, um die erforderliche Klarheit zu gewinnen.

Ein höher konzentriertes Orangenöl-Konzentrat erhält man, wenn etwa 850 g Polysorbat 20 auf etwa 50°C bis etwa 60°C erwärmt und in dieses warme Polysorbat 20 etwa 150 g des oben angegebenen Orangenöls unter Rühren eingearbeitet werden. Es empfiehlt sich, die Mischung nochmals auf etwa 85°C zu erwärmen und weiter bis zur Transparenz zu rühren. Das sich ergebende 15 %ige Orangenöl Konzentrat hat eine leicht orange-gelbe Farbe, ist transparent, viskos und zeigt einen deutlichen Orangengeruch. Zur Gewinnung einer wässrigen Lösung dieses Konzentrats wird es am besten mit etwa 37°C warmem Wasser verrührt. Ein auf diese Temperatur erwärmtes Konzentrat läßt sich leicht wunschgemäß verarbeiten.

In entsprechender Weise lassen sich Orangenöl-Konzentrate zwischen 10 Gew% und 15 Gew% gewinnen, wenn die jeweils eingesetzte Menge an Polysorbat 20 entsprechend verändert und eventuell in leichter Wärme gerührt wird. Die Konzentrate können als Aromastoff bei der Herstellung von Speiseeis, Kaugummi und bei Nahrungsergänzungsmitteln eingesetzt werden.

Das Orangenöl dient hier lediglich als ein Beispiel für ein ätherisches Öl. Anstelle von Orangenöl können andere ätherische Öle wie beispielsweise Teebaumöl eingesetzt und solubilisiert werden:

### Material:

a) Teebaumöl (MELALEUCA ETHEROLEUM) mit den im folgenden genannten Eigenschaften, welche einem -Zertifikat des Herstellers "Nature", Chr. Hammerschmidt Str. 33, D-96355 Tettau, entnommen wurden,
b) Polysorbat 20
   Das Teebaumöl ist folgendermaßen charakterisiert:

### Produkt

Handelsname: Teebaumöl
Artikel Nr. A113
Chargen Nr. V003022
Synonyme: MELALEUCA, ETHEROLEUM
EINECS-Nr.:8085-48-9, CTFA: Tea Tree Oil,
Malaleuca alternifolia
Pharmakopoe: Ph-Eur-4.01

### Eigenschaften

Farbe: farblos bis schwach gelblich
Geruch: terpenartig-charakteristisch
Konsistenz: klar, flüssig

### Reinheit

mischbar mit: Ethanol 96%, Ether, fette Öle
relative Dichte bei 20°C: 0,8950
Brechungsindex bei 20°C: 1,4790
optische Drehung bei 20°C: +10°
Haltbarkeit ab Lieferdatum: 24 Monate
Lagerung: licht-/luft-/wärmageschützt
Herkunft: Australien

### Identität

Chromatographisches Profil: entsprechend
Bewertung: entsprechend
Chargen Nr.: 040051
Charakterisierung: Ätherisches Öl
Symbol: Xn - gesundheitsschädlich
Entzündlich
gesundheitsschädlich beim Verschlucken
Reizt die Haut
Gesundheitsschädlich: Kann beim Verschlucken Lungenschäden verursachen
In den natürlichen Bestandteilen enthaltene Allergene: d-Limonen
CAS-Nr. 5989-27-5, Einecs-Nr.:227-813-5

Weitere Angaben zu möglichen Gefahren, Erste-Hilfe-Maßnahmen, Maßnahmen zur Brandbekämpfung, Maßnahmen bei unbeabsichtigter Freisetzung, Handhabung und Lagerung sind dem Sicherheitsdatenblatt zu dem oben spezifizierten Teebaumöl vom 22.01.2004 zu entnehmen.

Etwa 700 g Polysorbat 20 werden auf etwa 50°C bis etwa 60°C erwärmt. In das warme Polysorbat werden etwa 300 g Teebaumöl eingerührt. Die Mischung wird auf etwa 85 °C erwärmt und solange gerührt, bis sich Klarheit des Konzentrats eingestellt hat. Das Konzentrat ist bei Raumtemperatur transparent, viskos und riecht nach Teebaumöl. Dieses 30%ige Teebaumölkonzentrat ist wasserlöslich.

Um die Löslichkeit zu verbessern empfiehlt es sich, das Konzentrat in auf etwa 40°C erwärmtes Wasser einzurühren, wonach sich eine klare wässrige Lösung des Konzentrats ergibt.

Bei Einsatz eines anderen Polysorbats muß zur Gewinnung eines klaren Konzentrats die Menge des Polysorbats und de Teebaumöls geändert werden.

### Beispiel 2 (γ-Terpinen-Solubilisat):

Material:
a) γ-Terpinen mit den im folgenden genannten Eigenschaften, welche dem Analysenzertifikat vom 11.2.03 des Herstellers Carl Roth GmbH + Co entnommen wurden,
b) Polysorbat 80

Das γ-Terpinen hat folgende Eigenschaften:
Artikelnummer: 8039
Produkt: γ-Terpinen ROTICHROM GC
Charge: 43256376
CAS-Nummer: 99-85-4
Dichte: 0,849
Molekulargewicht: 136,24
Formel: C10H16
Lagertemperatur: +4°C
Flammpunkt: 51°C
Siedetemperatur: 182°C

Weitere Daten zu dem γ-Terpinen sind dem oben genannten Analysenzertifikat zu entnehmen.

70 g γ-Terpinen werden mit 930 g Polysorbat 80, bis zur Klarheit und homogenen Verteilung vermischt und verrührt. Zur Beschleunigung des Mischvorgangs kann das Gemisch zum Beispiel bis 80 °C erwärmt werden. Ein so hergestelltes 7 %-iges γ-Terpinen-Konzentrat läßt sich in Wasser zu einer klaren und stabilen Lösung lösen. Zur Beschleunigung des Lösungsvorgangs kann das Konzentrat in auf etwa 40°C erwärmtes Wasser eingerührt werden.

Eine grundsätzlich mögliche Verwendung eines anderen Polysorbats bedingt eine andere Gewichtsverteilung im Konzentrat von γ Terpinen und Polysorbat.

### Beispiel 3A (Phosphatidylserin-Solubilisat):

Material:
a) Phosphatidylserin-Pulver (LECI-PS 90 PN der Degussa BioActives GmbH)
b) Polysorbat 80
c) Glycerol 85%-ig

80 g pulverförmiges Phosphatidylserin werden mit 510 g Polysorbat 80 und 410 g Glycerol bis zur Klarheit und homogenen Verteilung vermischt und verrührt. und während des Rührens auf ca. 90 °C erwärmt. Ein so hergestelltes 7,2%-iges Phosphatidylserin-Konzentrat läßt sich in Wasser, das zweckmäßig auf etwa 40°C erwärmt wurde, zu einer klaren und stabilen Lösung auflösen.

### Beispiel 3B (Phosphatidylserin-Solubilisat):

Material:
a) Phosphatidylserin (LECI-PS 20 F der Degussa BioActives GmbH)
b) Polysorbat 80
c) Glycerol 85%-ig

150 g des ölig/zähflüssigen Phosphatidylserins werden mit 600 g Polysorbat 80 und 250 g Glycerol bis zur Klarheit und homogenen Verteilung vermischt und verrührt und während des Rührens auf ca. 90 °C erwärmt. Ein so hergestelltes ca. 3,3%-iges Phophatidylserin-Konzentrat läßt sich in Wasser zu einer klaren Lösung auflösen. Zur Beschleunigung des Lösungsvorganges mit Wasser kann das Wasser auf zum Beispiel 40 °C erwärmt werden.

Bei Verwendung eines anderen Polysorbats müssen die Gewichtsverhältnisse der Bestandteile des Konzentrats verändert werden.

### Beispiel 4 (Lanolin-Solubilisat):

Material:
a) Lanolin (Wachs), Produktnr. 259543 der Firma# Sigma-Aldrich
b) Polysorbat 80

50 g Lanolin werden mit 950 g Polysorbat 80 vermischt und unter Erhöhung der Temperatur der Mischung auf etwa 100 °C solange gerührt, bis sich Klarheit und homogene Verteilung der Bestandteile erreicht ist. Das so hergestellte Konzentrat enthält 5 Gew% Lanolin. Dieses 5%-ige Lanolin-Konzentrat läßt sich in Wasser zu einer klaren und stabilen Lösung auflösen. Die Auflösung wird beschleunigt, wenn das Konzentrat in auf etwa 40°C erwärmtes Wasser

### Beispiel 5 (Linolsäuretriglycerid-Solubilisat):

### Material:

a) konjugiertes Linolsäuretriglycerid, vertrieben von der Firma Grünau Illertissen GmbH unter Marke Selin CLA-TG
b) Polysorbat 80

50 g des öligen, zähflüssigen Linolsäuretriglycerids werden mit 950 g Polysorbat 80 vermischt und bei einer Temperatur von etwa 100 °C verrührt, bis sich Klarheit und homogene Verteilung der Komponenten eingestellt hat. Das so hergestellte Konzentrat enthält 5 Gew% des genannten Wirkstoffes. Das Konzentrat läßt sich in Wasser zu einer klaren und homogenen Lösung auflösen. Der Lösungsvorgang wird beschleunigt, wenn in Wasser von etwa 40°C aufgelöst wird.

Die grundsätzlich mögliche Verwendung eines anderen Polysorbats erfordert eine Veränderung der Gewichtsverhältnisse der Komponenten des Konzentrats. Zur Bedeutung des konjugierten Linolsäuretriglycerids wird auf das Dokument EP-B-579 901 Bezug genommen.

### Beispiel 6 (Citral Solubilisat):

### Material

a) Citral (Degussa, Lotnr. 1000103751)
b) Polysorbat 20
c) Ethanol

Zunächst werden etwa 430 g Polysorbat 20 auf etwa 50°C bis etwa 60°C erwärmt. In das warme Polysorbat werden etwa 70 g öliges Citral eingebracht und gerührt und während des Rührens wird die Temperatur der Mischung auf etwa 85°C erhöht. Bei dieser Temperatur wird solange gerührt, bis sich Homogenität der Mischung eingestellt habt. Alsdann werden etwa 500 g 96%igem Ethanol in die kalte Mischung eingerührt. Das sich ergebende Konzentrat ist transparent, viskos und entwickelt einen leichten Geruch nach Zitronen. Das Konzentrat enthält etwa 7 Gew.% Citral.

Das Konzentrat ist wasserlöslich; zur Beschleunigung des Lösungsvorgangs empfiehlt es sich, das Wasser auf etwa 40°C zu erwärmen.

Zur Gewinnung eines 14%igen Citral-Konzentrats rührt man in etwa 860 g auf etwa 50°C bis etwa 60°C erwärmtes Polysorbat 20 eine Menge von etwa 140 g des öligen Citrals ein. Nach dem vollständigen Einrühren wird die Temperatur der Mischung während des Rührens auf etwa 85°C erhöht und solange weitergerührt, bis Klarheit und Homogenität der Mischung erkennbar sind. Nach Abkühlen erhält man ein transparentes, viskoses und mit leichtem Zitronengeruch behaftetes 14%iges Citralkonzentrat, das wasserlöslich ist. Auch hier wird die Auflösung in Wasser beschleunigt, wenn das Wasser auf etwa 40°C leicht erwärmt ist.

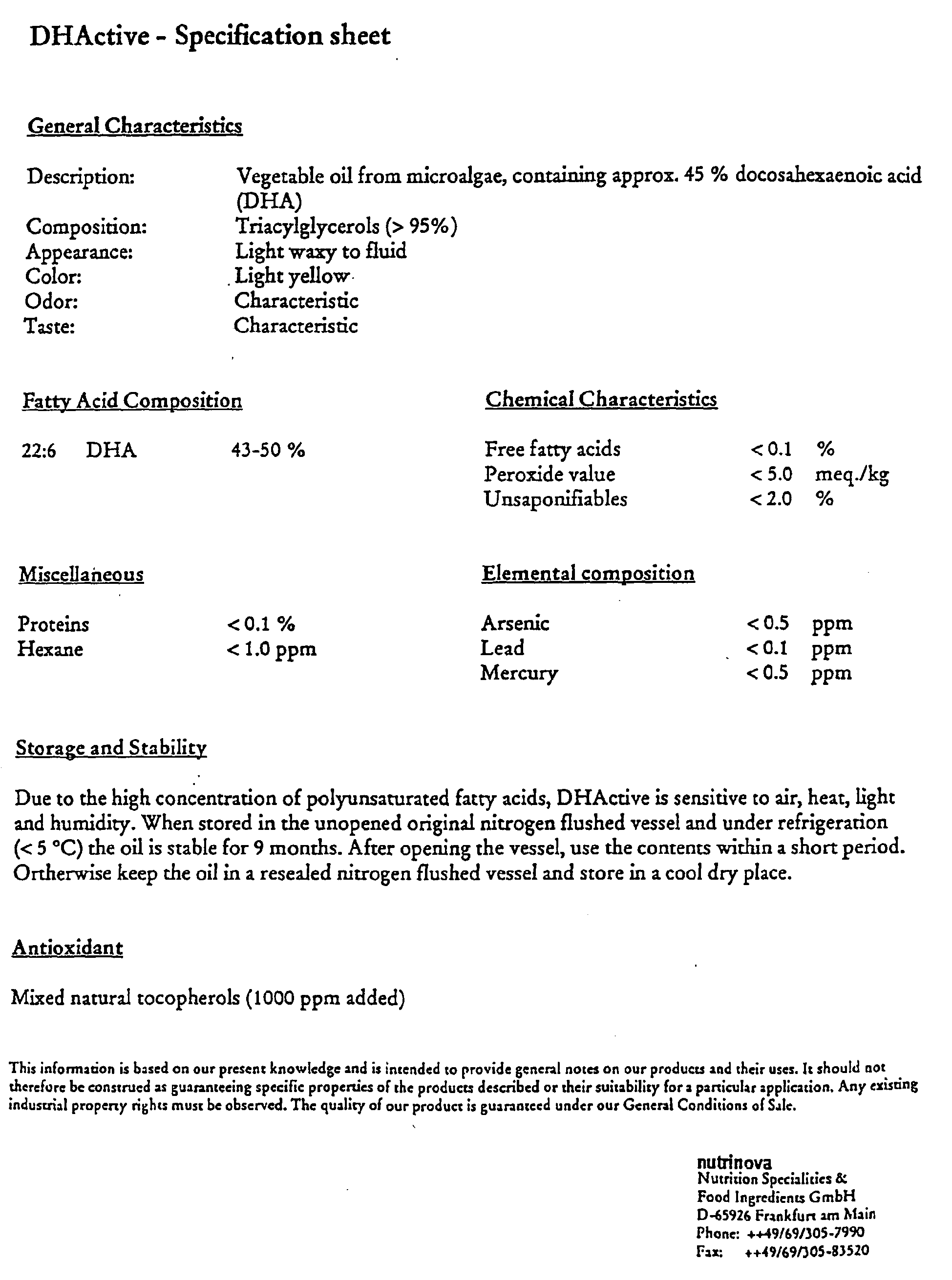

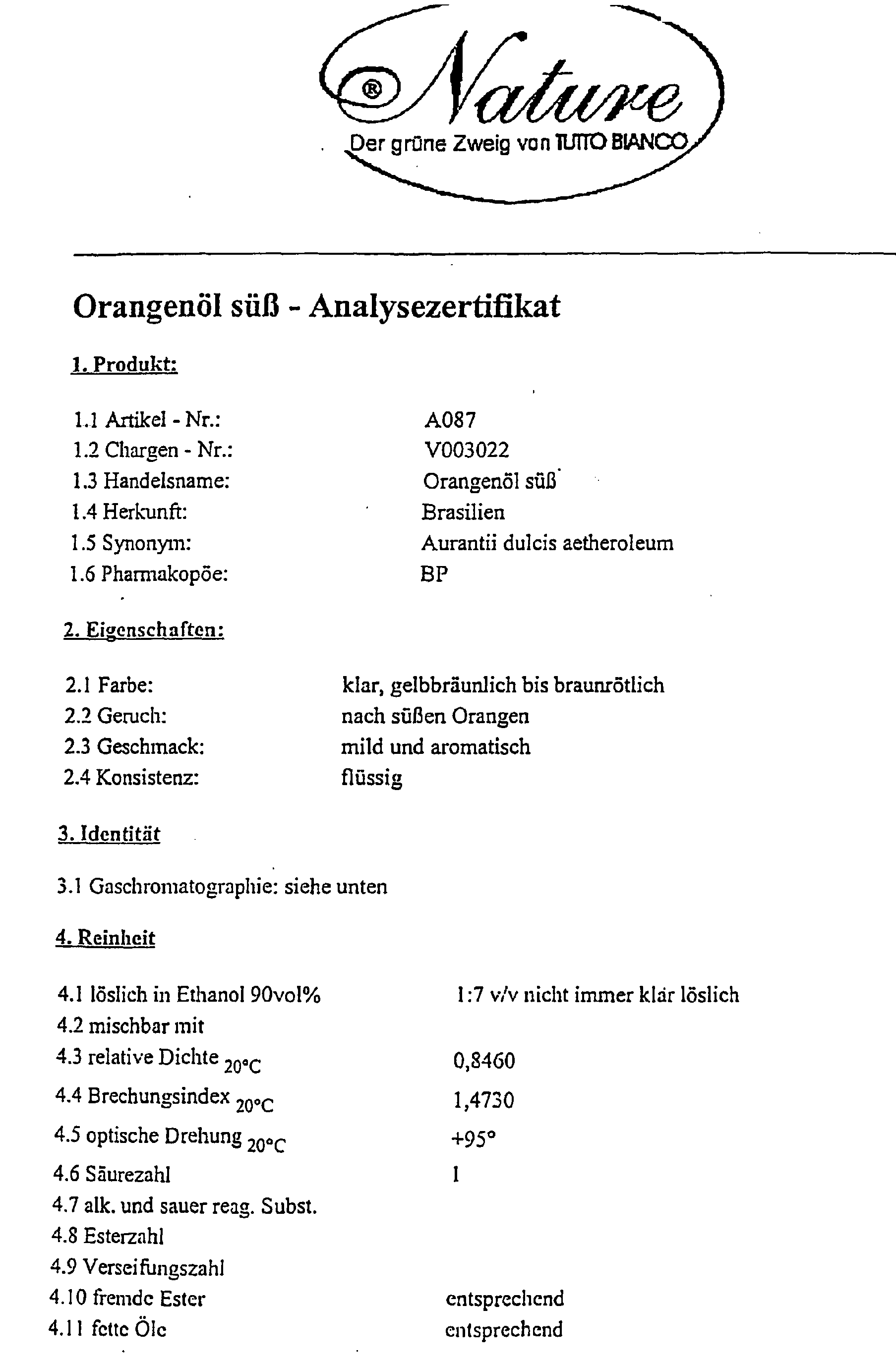

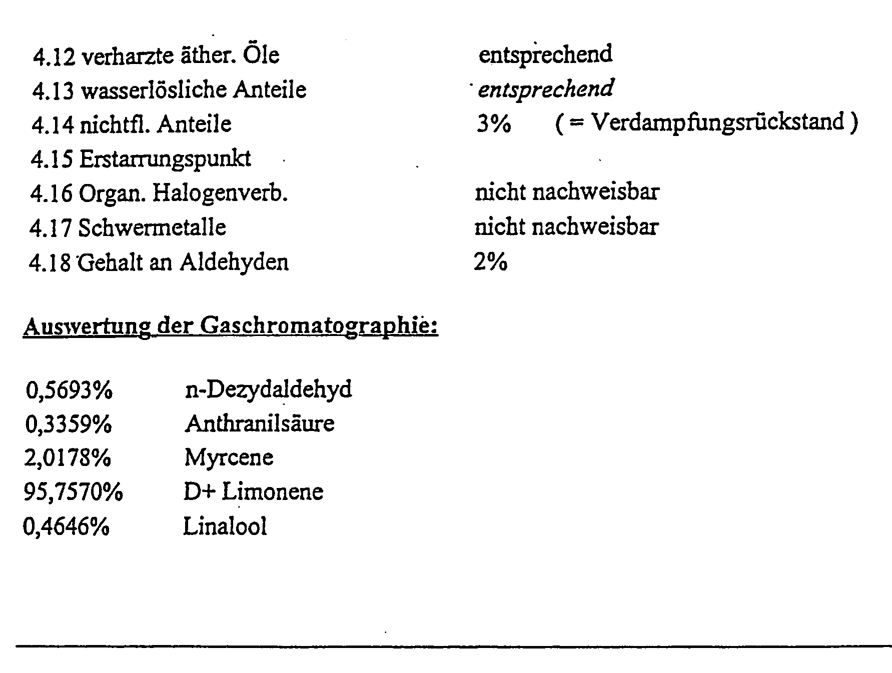

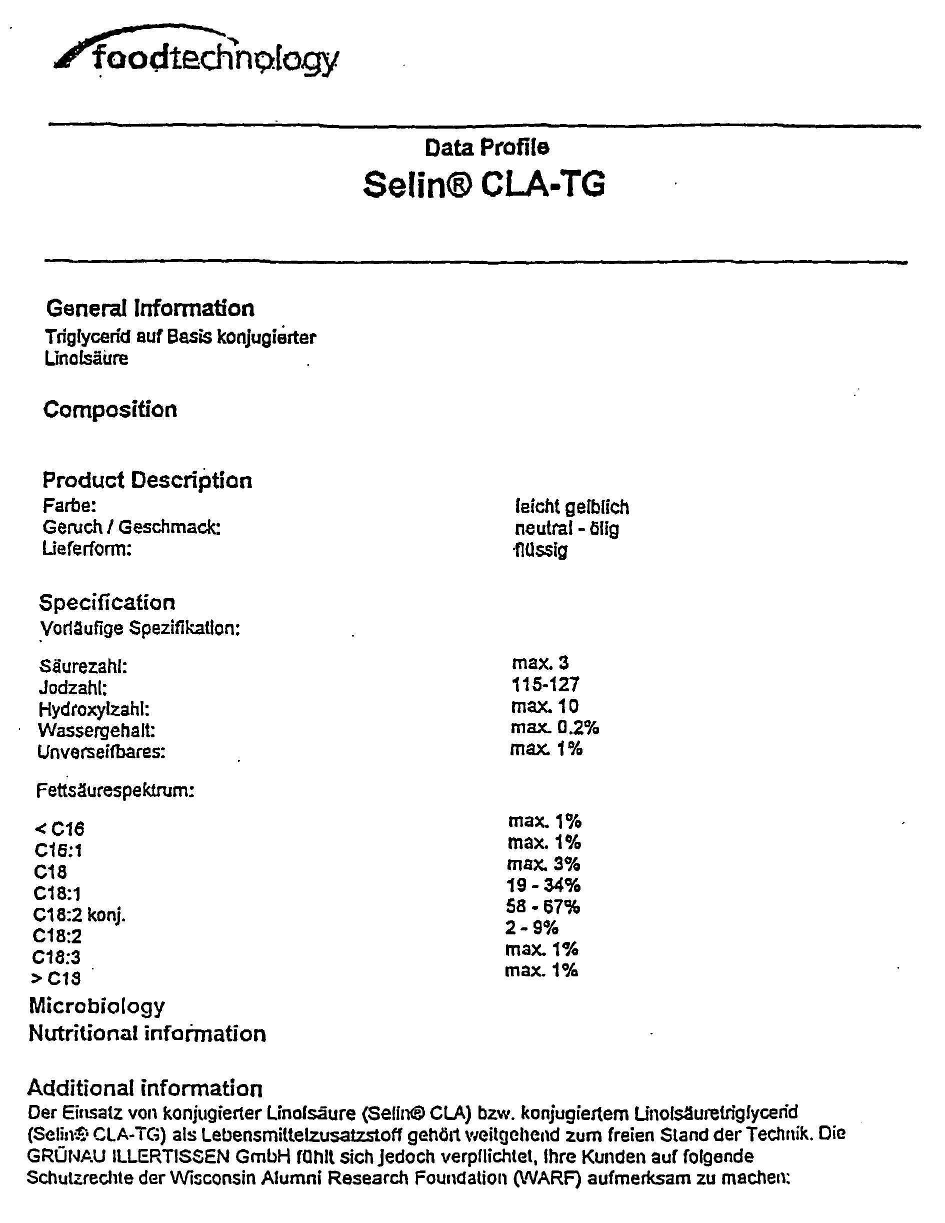

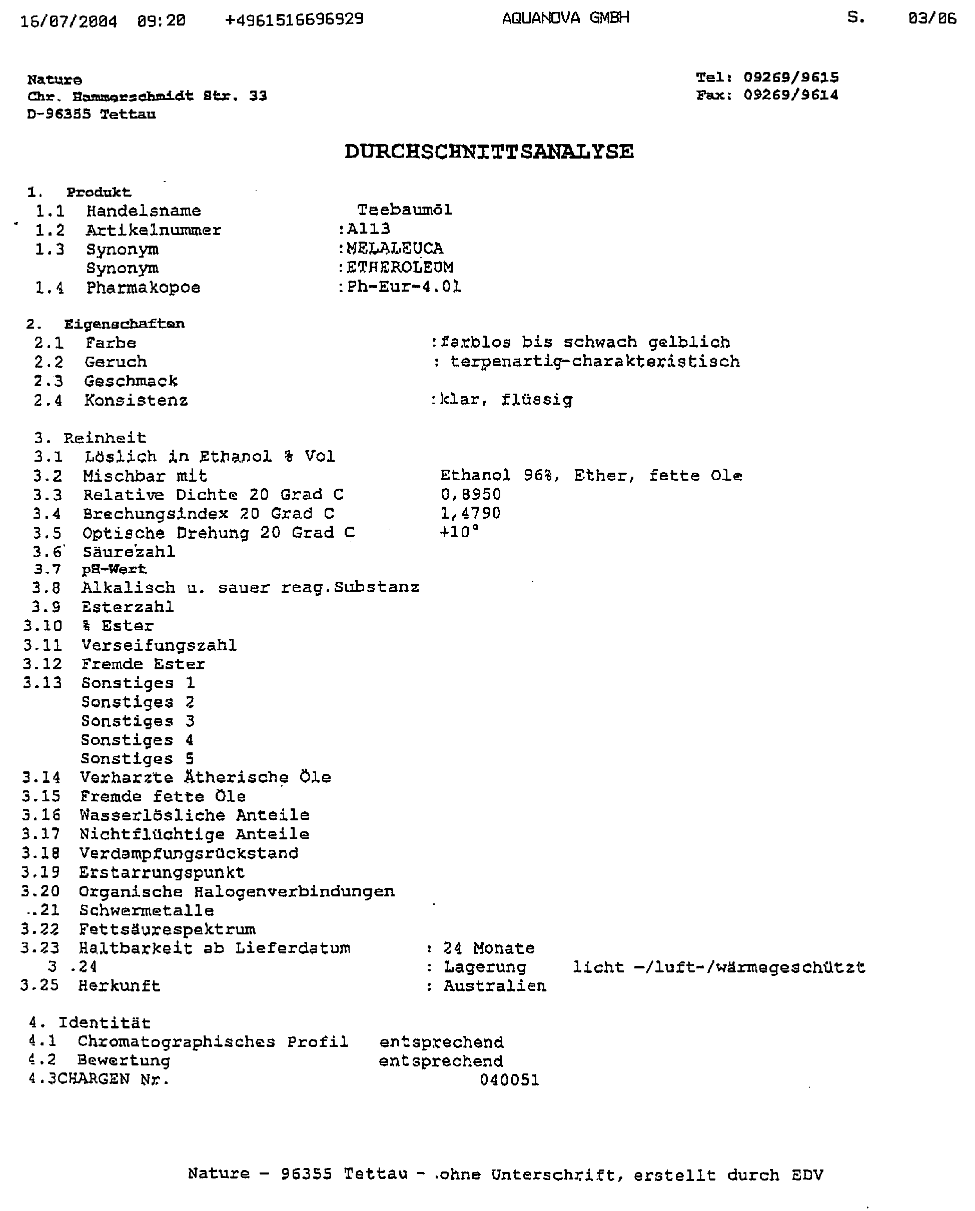

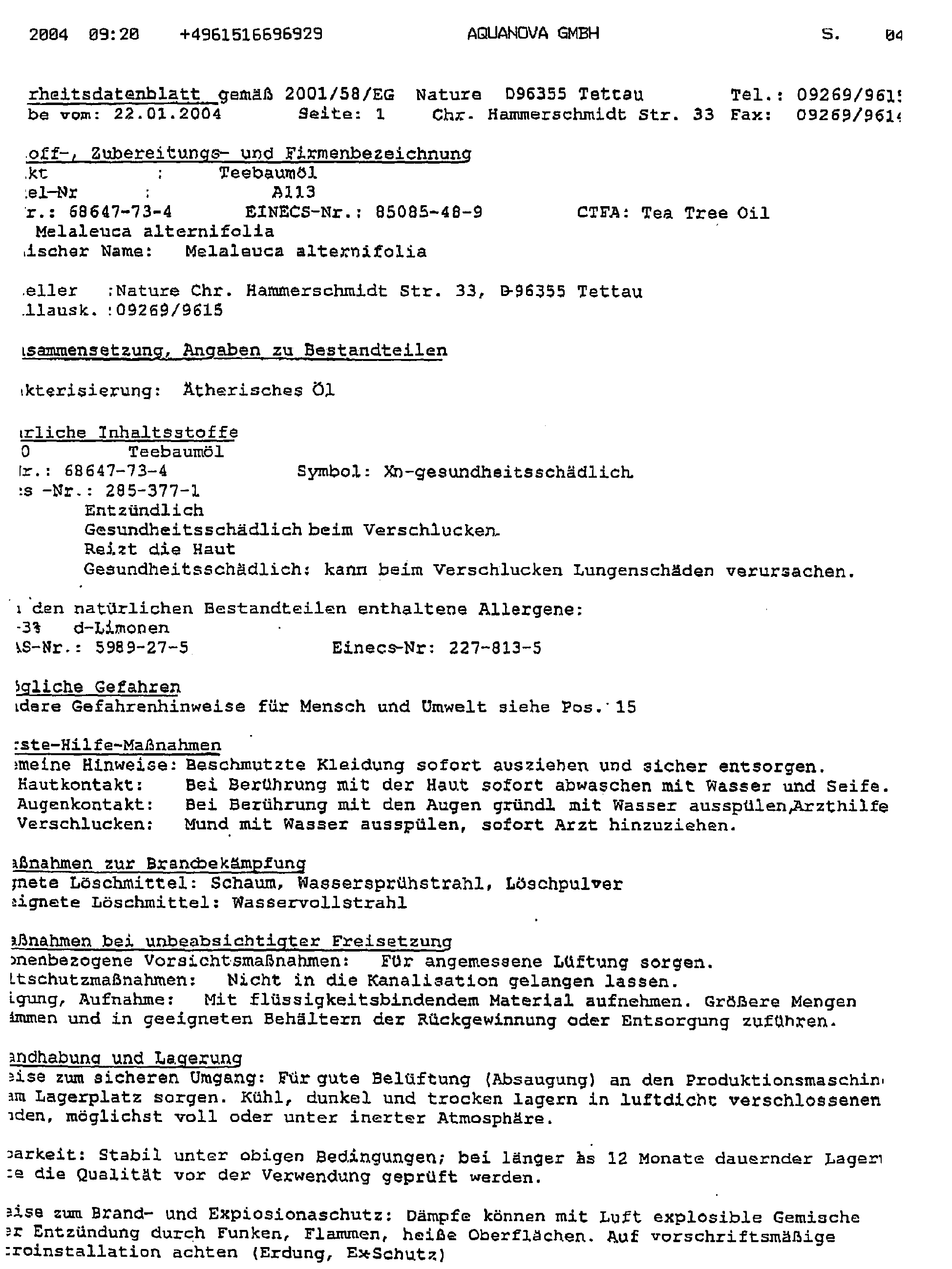

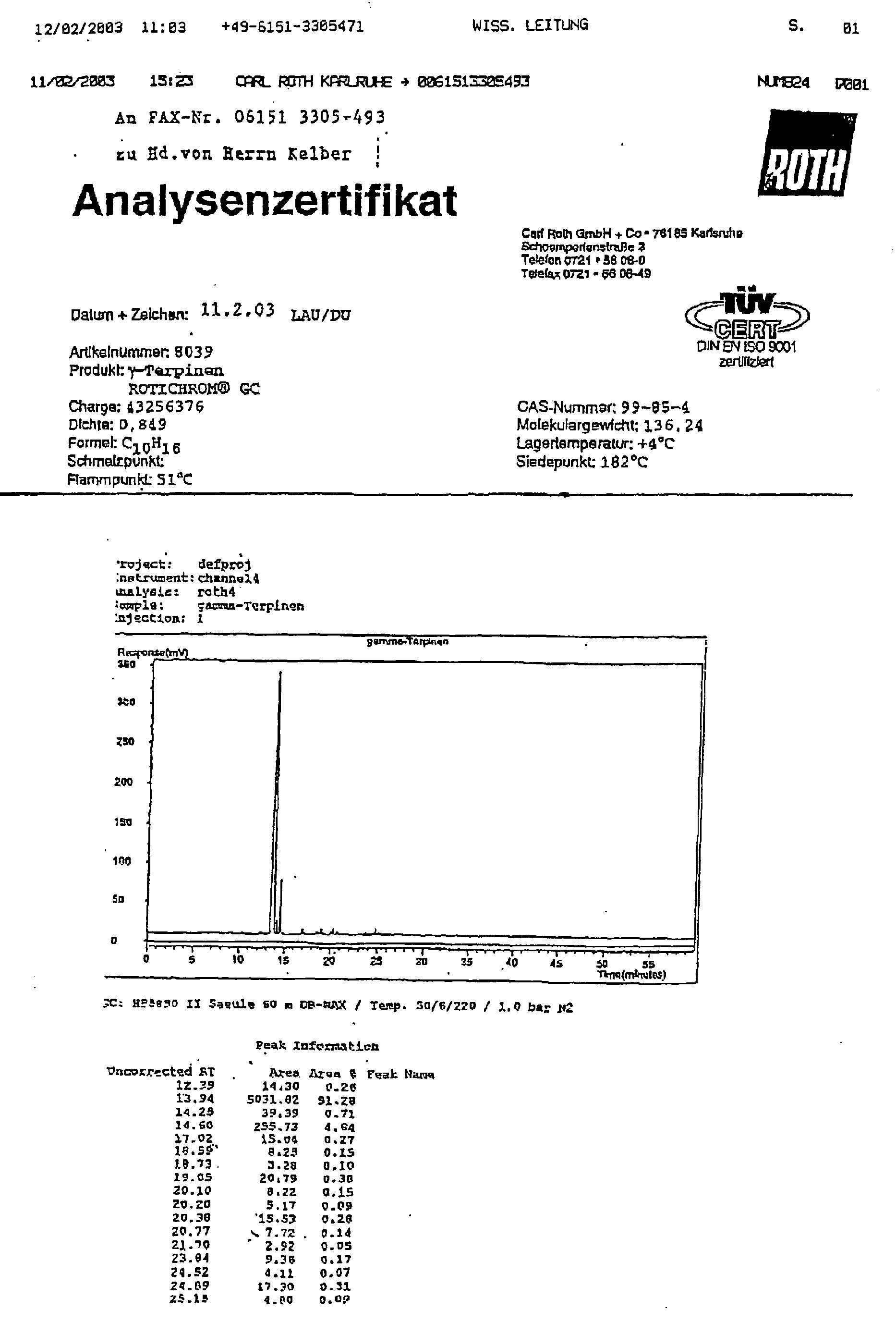

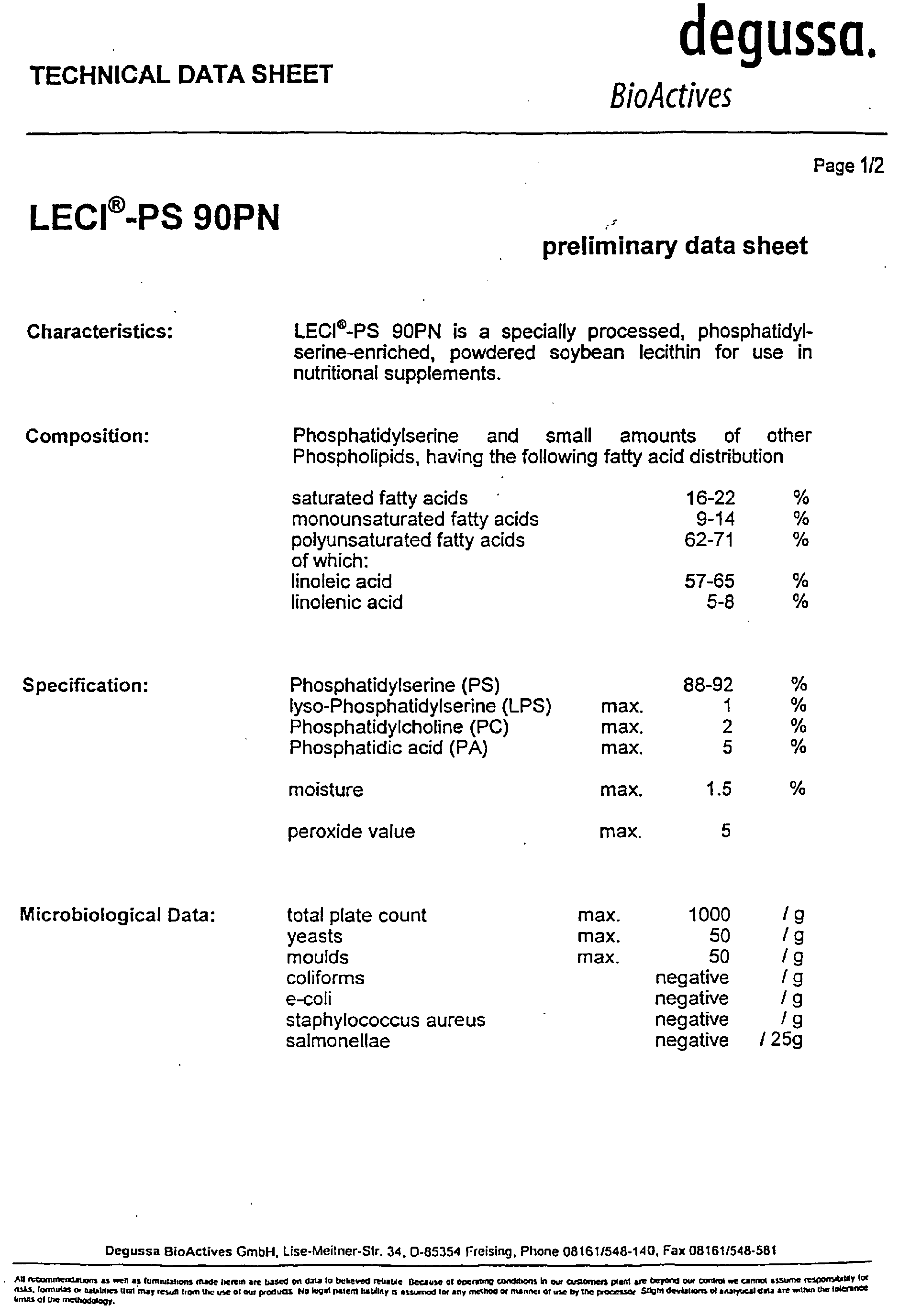

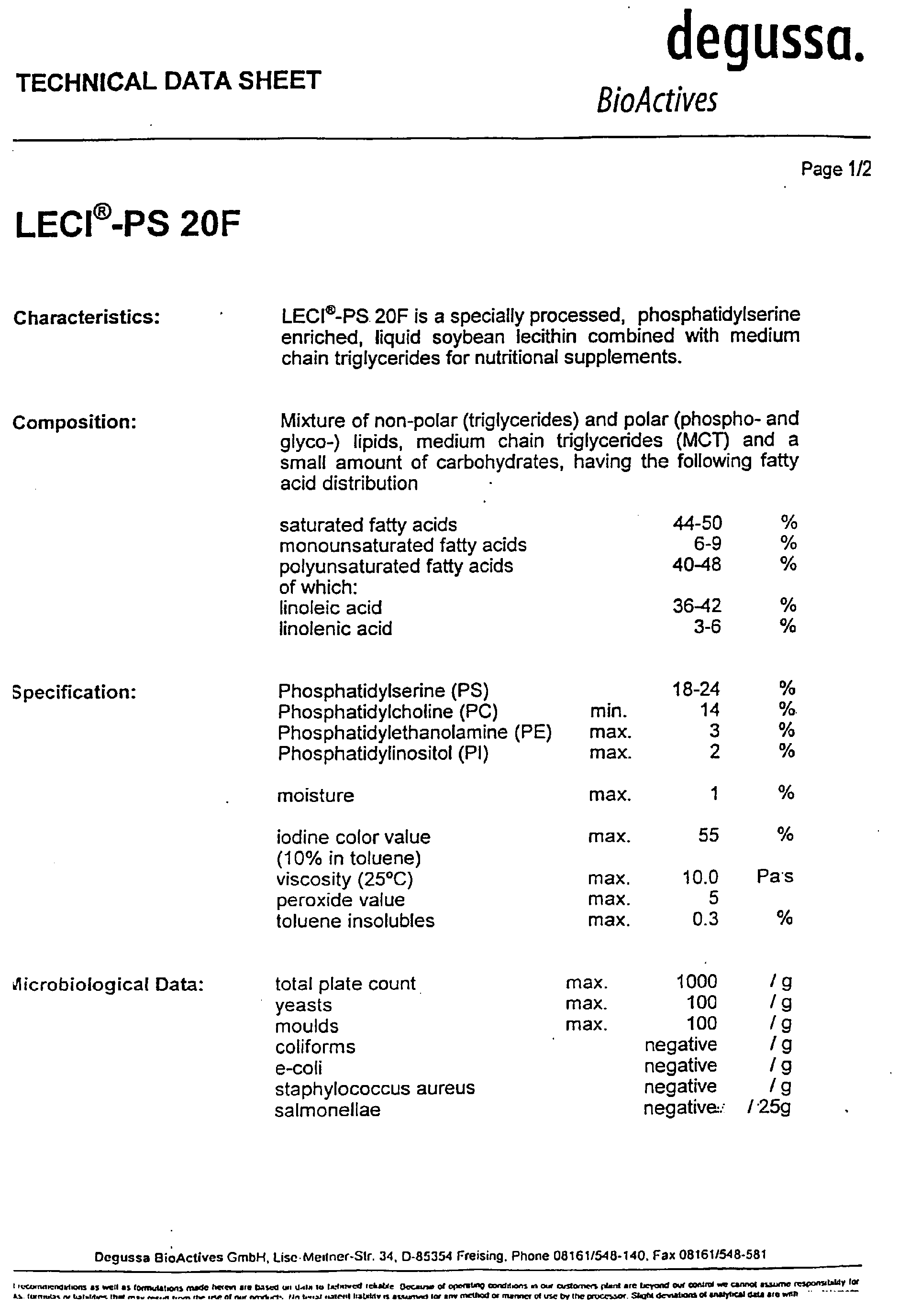

## Patentansprüche

1. Konzentrat bestehend aus einem Wirkstoff aus der Gruppe, welche aus einem ätherischen Öl, einem Terpinen, einem Phosphatidylserin, Lanolin, einem Linolsäuretriglycerid, Citral oder Teebaumöl besteht, und einem Überschuß an einem Polysorbat, der wenigstens das Zweieinhalbfache des Wirkstoffgewichts beträgt.

2. Konzentrat bestehend aus einem ätherischen Öl, als Wirkstoff und einem Überschuß an Polysorbat 20, der 7:3 beträgt.

3. Konzentrat nach Anspruch 1, bei dem der Überschuß wenigstens das Sechsfache des Wirkstoffgewichts beträgt.

4. Konzentrat bestehend aus einem Konzentrat nach einem der Ansprüche 1 oder 3 und einem Gehalt an Glycerol.

5. Konzentrat bestehend aus einem Konzentrat nach einem der Anspruüche 1 oder 3 und einem Gehalt an Ethanol.

6. Konzentrat nach einem der Ansprüche 1 oder 3 bis 5, welches aus dem Wirkstoff mit Ausnahme des ätherischen Öls, des Teebaumöls und des Citrals, und Polysorbat 80 besteht.

7. Konzentrat nach einem der Ansprüche 1 bis 5, welches aus dem ätherischen Öl oder dem Teebaumöl oder dem Citral und Polysorbat 20 besteht

8. Konzentrat nach einem der Ansprüche 1 oder 3 bis 6, welches aus 70 Gew-Anteilen γ Terpinen und 930 Gew-Anteilen Polysorbat 80 besteht.

9. Konzentrat nach einem der Ansprüche 1 oder 3 bis 6, welches aus 50 Gew-Anteilen Lanolin und 950 Gew-Anteilen Polysorbat 80 besteht.

10. Konzentrat nach einem der Ansprüche 1 oder 3 bis 6, welches aus 50 Gew-Anteilen konjugiertem Linolsäuretriglycerid und 950 Gew-Anteilen Polysorbat 80 besteht.

11. Konzentrat nach einem der Ansprüche 1 oder 3 bis 6, welches aus 150 Gew-Anteilen Phosphatidylserin, 600 Gew-Anteilen Polysorbat 80 und 250 Gew-Anteilen Glycerol besteht.

12. Konzentrat nach einem der Ansprüche 1 oder 3 bis 6, welches aus 80 Gew-Anteilen Phosphatidylserin, 510 Gew-Anteilen Polysorbat 80 und 410 Gew-Anteilen Glycerol besteht.

13. Konzentrat nach einem der Ansprüche 1, 3 bis 5 oder 7, welches aus 100 Gew-Anteilen eines das ätherische Öl enthaltenden Orangenöls und 900 Gew-Anteilen Polysorbat 20 besteht.

14. Konzentrat nach einem der Ansprüche 2 oder 7, bei welchem das Gewichtsverhältnis von ätherischem Öl zu Polysorbat 20 auf bis zu 3:7 eingestellt ist.

15. Konzentrat nach einem der Ansprüche 2 oder 7, welches aus etwa 300 Gew-Anteilen Teebaumöl und etwa 700 Gew-Anteilen Polysorbat 20 besteht.

16. Konzentrat nach einem der Ansprüche 1, 3 bis 5 oder 7, welches aus etwa 430 Gew-Anteilen Polysorbat 20, etwa 70 Gew-Anteilen Citral und etwa 500 Gew-Anteilen Ethanol besteht.

17. Konzentrat nach einem der Ansprüche 1, 3 bis 5 oder 7, welches aus etwa 860 Gew-Anteilen Polysorbat 20 und etwa 140 Gew-Anteilen Citral besteht.

18. Verfahren zur Herstellung eines Konzentrats nach einem der Ansprüche 1, 3 bis 13, 16 oder 17, bei welchem der Wirkstoff mit einem Überschuß von wenigstens dem Zeieinhalbfachen des Wirkstoffgewichts an Polysorbat 80 oder Polysorbat 20 bis zur Klarheit der Mischung verrührt wird.

19. Verfahren zur Herstellung eines Konzentrats nach einem der Ansprüche 2, 14 oder 15 bis 18, bei welchem das ätherischen Öl als Wirkstoff mit einem Überschuß von 7:3 an Polysorbat 20 bis zur Klarheit der Mischung verrührt wird.

20. Verfahren nach Anspruch 18, bei welchem ein Überschuß von wenigstens dem Sechsfachen eingesetzt wird.

21. Verfahren nach einem der Ansprüche 18 bis 20, bei welchem die Mischung zur Beschleunigung des Mischvorganges auf eine Temperatur von etwa 80°C bis etwa 100°C erwärmt wird.

22. Verfahren nach einem der Ansprüche 18 bis 20, bei welchem der Mischung Glycerol zugesetzt wird.

23. Verfahren nach einem der Ansprüche 18 bis 20, bei welchem der Mischung Ethanol zugesetzt wird.

24. Verwendung des Konzentrats nach einem der Ansprüche 1 bis 17 als Zusatz zu Lebensmitteln, nichtalkoholischen Getränken, Kosmetika, Pharmazeutika oder Nährlösungen.

## Claims

1. Concentrate consisting of an active ingredient selected from the group consisting of an essential oil, a terpinene, a phosphatidylserine, lanolin, a linoleic acid triglyceride, citral or tea-tree oil, and a surplus amount of a polysorbate being at least two and a half times the weight of the active ingredient.

2. Concentrate consisting of an essential oil as the active ingredient and a surplus amount of polysorbate 20 in the ratio of 7:3.

3. Concentrate as claimed in Claim 1, wherein the surplus amount is at least six times the weight of the active ingredient.

4. Concentrate consisting of a concentrate as claimed in any one of Claims 1 or 3 and a glycerol content.

5. Concentrate consisting of a concentrate as claimed in any one of Claims 1 or 3 and an ethanol content.

6. Concentrate as claimed in any one of Claims 1 or 3 to 5, which consists of the active ingredient except for the essential oil, the tea-tree oil and the citral, and polysorbate 80.

7. Concentrate as claimed in any one of Claims 1 to 5, which consists of the essential oil or the tea-tree oil or the citral and polysorbate 20.

8. Concentrate as claimed in any one of Claims 1 or 3 to 6, which consists of 70 parts by weight of γ terpinene and 930 parts by weight of polysorbate 80.

9. Concentrate as claimed in any one of Claims 1 or 3 to 6, which consists of 50 parts by weight of lanolin and 950 parts by weight of polysorbate 80.

10. Concentrate as claimed in any one of Claims 1 or 3 to 6, which consists of 50 parts by weight of conjugated linoleic acid triglyceride and 950 parts by weight of polysorbate 80.

11. Concentrate as claimed in any one of Claims 1 or 3 to 6, which consists of 150 parts by weight of phosphatidylserine, 600 parts by weight of polysorbate 80 and 250 parts by weight of glycerol.

12. Concentrate as claimed in any one of Claims 1 or 3 to 6, which consists of 80 parts by weight of phosphatidylserine, 510 parts by weight of polysorbate 80 and 410 parts by weight of glycerol.

13. Concentrate as claimed in any one of Claims 1, 3 to 5 or 7, which consists of 100 parts by weight of an orange peel oil containing the essential oil, and 900 parts by weight of polysorbate 20.

14. Concentrate as claimed in any one of Claims 2 or 7, wherein the weight ratio of essential oil to polysorbate 20 is set up to 3:7.

15. Concentrate as claimed in any one of Claims 2 or 7, which consists of approximately 300 parts by weight of tea-tree oil and approximately 700 parts by weight of polysorbate 20.

16. Concentrate as claimed in any one of Claims 1, 3 to 5 or 7, which consists of approximately 430 parts by weight of polysorbate 20, approximately 70 parts by weight of citral and approximately 500 parts by weight of ethanol.

17. Concentrate as claimed in any one of Claims 1, 3 to 5 or 7, which consists of approximately 860 parts by weight of polysorbate 20 and approximately 140 parts by weight of citral.

18. Method for producing a concentrate as claimed in any one of Claims 1, 3 to 13, 16 or 17, wherein the active ingredient is mixed with a surplus amount of polysorbate 80 or polysorbate 20 being at least two and a half times the weight of the active ingredient, until the mixture becomes clear.

19. Method for producing a concentrate as claimed in any one of Claims 2, 14 or 15 to 18, wherein the essential oil as the active ingredient is mixed with a surplus amount of polysorbate 20 at a ratio of 7:3, until the mixture becomes clear.

20. Method as claimed in Claim 18, wherein a surplus amount of at least six times is used.

21. Method as claimed in any one of Claims 18 to 20, wherein the mixture is heated to a temperature of approximately 80°C to approximately 100°C in order to accelerate the mixing process.

22. Method as claimed in any one of Claims 18 to 20, wherein glycerol is added to the mixture.

23. Method as claimed in any one of Claims 18 to 20, wherein ethanol is added to the mixture.

24. Use of the concentrate as claimed in any one of Claims 1 to 17 as an additive in foodstuffs, non-alcoholic drinks, cosmetics, pharmaceuticals or nutrient solutions.

## Revendications

1. Concentré constitué d'une substance active choisie dans le groupe qui comprend une huile essentielle, un terpinène, une phosphatidylsérine, la lanoline, un triglycéride d'acide linoléique, le citral ou l'huile d'arbre à thé, et d'un excès d'un Polysorbate qui s'élève à au moins deux fois et demie le poids de substance active.

2. Concentré constitué d'une huile essentielle en tant que substance active et d'un excès de Polysorbate 20 qui s'élève à un rapport de 7:3.

3. Concentré suivant la revendication 1, dans lequel l'excès s'élève au moins au sextuple du poids de substance active.

4. Concentré constitué d'un concentré suivant l'une des revendications 1 et 3 et d'une teneur en glycérol.

5. Concentré constitué d'un concentré suivant l'une des revendications 1 et 3 et d'une teneur en éthanol.

6. Concentré suivant l'une des revendications 1 ou 3 à 5, qui est constitué de la substance active à l'exception de l'huile essentielle, de l'huile d'arbre à thé et du citral, et de Polysorbate 80.

7. Concentré suivant l'une des revendications 1 à 5, qui est constitué de l'huile essentielle ou de l'huile d'arbre à thé ou du citral et de Polysorbate 20.

8. Concentré suivant l'une des revendications 1 ou 3 à 6, qui est constitué de 70 parties en poids de terpinène et de 930 parties en poids de Polysorbate 80.

9. Concentré suivant l'une des revendications 1 ou 3 à 6, qui est constitué de 50 parties en poids de lanoline et de 950 parties en poids de Polysorbate 80.

10. Concentré suivant l'une des revendications 1 ou 3 à 6, qui est constitué de 50 parties en poids de triglycéride d'acide linoléique conjugué et de 950 parties en poids de Polysorbate 80.

11. Concentré suivant l'une des revendications 1 ou 3 à 6, qui est constitué de 150 parties en poids de phosphatidylsérine, 600 parties en poids de Polysorbate 80 et 250 parties en poids de glycérol.

12. Concentré suivant l'une des revendications 1 ou 3 à 6, qui est constitué de 80 parties en poids de phosphatidylsérine, 510 parties en poids de Polysorbate 80 et 410 parties en poids de glycérol.

13. Concentré suivant l'une des revendications 1, 3 à 5 ou 7, qui est constitué de 100 parties en poids d'une essence d'orange contenant l'huile essentielle et de 900 parties en poids de Polysorbate 20.

14. Concentré suivant l'une des revendications 2 et 7, dans lequel le rapport en poids de l'huile essentielle au Polysorbate 20 est ajusté à une valeur allant jusqu'à 3:7.

15. Concentré suivant l'une des revendications 2 et 7, qui est constitué d'environ 300 parties en poids d'huile d'arbre à thé et d'environ 700 parties en poids de Polysorbate 20.

16. Concentré suivant l'une des revendications 1, 3 à 5 ou 7, qui est constitué d'environ 430 parties en poids de Polysorbate 20, d'environ 70 parties en poids de citral et d'environ 500 parties en poids d'éthanol.

17. Concentré suivant l'une des revendications 1, 3 à 5 ou 7, qui est constitué d'environ 860 parties en poids de Polysorbate 20 et d'environ 140 parties en poids de citral.

18. Procédé de production d'un concentré suivant l'une des revendications 1, 3 à 13, 16 ou 17, dans lequel la substance active est mélangée sous agitation avec un excès de Polysorbate 80 ou de Polysorbate 20 d'au moins deux fois et demie le poids de substance active jusqu'à clarté du mélange.

19. Procédé de production d'un concentré suivant l'une des revendications 2, 14 ou 15 à 18, dans lequel l'huile essentielle en tant que substance active est mélangée sous agitation avec un excès de Polysorbate 20 dans un rapport de 7:3 jusqu'à clarté du mélange .

20. Procédé suivant la revendication 18, dans lequel un excès d'au moins le sextuple est utilisé.

21. Procédé suivant l'une des revendications 18 à 20, dans lequel le mélange est chauffé à une température d'environ 80°C à environ 100°C en vue d'accélérer le processus de mélange.

22. Procédé suivant l'une des revendications 18 à 20, dans lequel du glycérol est ajouté au mélange.

23. Procédé suivant l'une des revendications 18 à 20, dans lequel de l'éthanol est ajouté au mélange.

24. Utilisation du concentré suivant l'une des revendications 1 à 17 comme additif pour produits alimentaires, boissons non alcoolisées, cosmétiques, produits pharmaceutiques ou solutions nutritives.
